# EUROPÄISCHE PATENTSCHRIFT

(11) **EP 2 380 052 B1**
(45) Veröffentlichungstag und Bekanntmachung des Hinweises auf die Patenterteilung: **19.08.2015**
(21) Anmeldenummer: 09810741.0
(22) Anmeldetag: 18.12.2009
(51) Int. Cl.: G02B 6/255, H01S 3/067, G02B 6/036, G02B 6/245

(54) **SPLEISSVERBINDUNG ZWISCHEN ZWEI OPTISCHEN FASERN SOWIE VERFAHREN ZUM HERSTELLEN EINER SOLCHEN SPLEISSVERBINDUNG**
SPLICED JOINT BETWEEN TWO OPTICAL FIBERS, AND METHOD FOR THE PRODUCTION OF SUCH A SPLICED JOINT
ÉPISSURE ENTRE DEUX FIBRES OPTIQUES ET PROCÉDÉ DE FABRICATION D'UNE TELLE ÉPISSURE

(30) Priorität: 23.12.2008 DE 102008062848
(43) Veröffentlichungstag der Anmeldung: 26.10.2011
(73) Patentinhaber: JENOPTIK Laser GmbH, 07745 Jena (DE); TRUMPF Laser GmbH, 78713 Schramberg (DE)
(72) Erfinder: KUMKAR, Malte, 99425 Weimar (DE); KOZAK, Marcin, Michal, 07751 Rothenstein - OT Oelknitz (DE); GUSEMANN, Ulrich, 07745 Jena (DE)
(74) Vertreter: Geyer, Fehners & Partner
(86) Internationale Anmeldenummer: PCT/DE2009/001788
(87) Internationale Veröffentlichungsnummer: WO 2010/072205

(56) Entgegenhaltungen:
- WO-A1-01/20380
- DE-C1- 4 300 593
- US-A- 4 196 965
- US-A- 4 773 724
- US-A- 5 592 579
- US-B1- 6 428 217

## Beschreibung

Die vorliegende Erfindung betrifft eine Spleißverbindung zwischen zwei optischen Fasern, bei der zumindest eine der Fasern einen Faserkern, der zumindest einen inneren Signalkern und einen diesen umgebenden Pumpkern umfaßt, sowie einen am Pumpkern anliegenden Fasermantel, der zur Führung von Licht im Pumpkern dient, aufweist. Ferner betrifft die vorliegende Erfindung ein Verfahren zur Herstellung einer solchen Spleißverbindung.

Wenn die Fasern zur Führung hoher optischer Leistung mit hoher Strahlqualität ausgelegt sind, besteht die Schwierigkeit der erhöhten Empfindlichkeit gegenüber Biegungen, die z.B. nachteilig dazu führen können, daß erhöhte Verluste für das im Faserkern geführte Licht auftreten und/oder daß es zu einer unerwünschten Kopplung zwischen verschiedenen im Faserkern geführten Moden kommt. Beides führt nachteilig zu einem unerwünschten Leistungsverlust für den gewünschten Mode.

Um die Biegeempfindlichkeit zu reduzieren, ist es bekannt, den Fasermantel, der zur Führung des Lichts im Pumpkern dient, relativ dick auszubilden. Damit der Fasermantel die gewünschte Führungseigenschaft aufweist, kann der Fasermantel z.B. aus Quarzglas hergestellt sein und im an dem am Pumpkern anliegenden Bereich ein spezielles Dotierungsprofil aufweisen, so daß die Brechzahl dieses Bereiches geringer ist als die Brechzahl des Pumpkerns. Alternativ ist es auch möglich, den Fasermantel so auszubilden, daß sein Innendurchmesser größer ist als der Außendurchmesser des Pumpkerns und den Fasermantel lediglich über dünne Stege mit dem Pumpkern zu verbinden, so daß zwischen dem Fasermantel und dem Pumpkern quasi ein Luftmantel vorliegt, der dann die gewünschte Führungseigenschaft gewährleistet. Solche Fasern werden häufig auch als Air-Clad-Fasern bezeichnet.

Wenn man solche Fasern miteinander verspleißt, tritt die Schwierigkeit auf, daß der dabei notwendige Wärmeeintrag das Dotierungsprofil des Fasermantels nachteilig verändert bzw. zu einem Kollabieren des Fasermantels derart führt, daß dieser im Spleißbereich nicht mehr durch Stege von dem Pumpkern beabstandet ist. In beiden Fällen ist die Pumplichtführung im Bereich des Spleißes deutlich verschlechtert, wodurch hinsichtlich der Führungseigenschaft für Pump- und Signallicht kein hochwertiger Spleiß möglich ist.

Aus der DE 35 30 963 A1 ist es bekannt, zum Verspleißen von zwei Glas-Lichtwellenleitern im Bereich der zu verspleißenden Enden die ursprünglichen Kunststoffmäntel, die keine Führungsfunktion aufweisen, sondern nur zum Schutz der Glas-Lichtwellenleitern dienen, zu entfernen, die Enden der freigelegten Glas-Lichtwellenleiter zu verspleißen, über die verspleißten Enden ein Röhrchen anzuordnen und den Hohlraum zwischen dem Röhrchen und den verspleißten Enden mit einem härtbaren Lack aufzufüllen.

Wenn man dieses aus der DE 35 30 963 A1 bekannte Vorgehen bei einer Spleißverbindung zwischen zwei optischen Fasern, von denen zumindest eine einen Faserkern, der zumindest einen inneren Signalkern und einen diesen umgebenden Pumpkern umfaßt, und einen am Pumpkern anliegenden Fasermantel, der zur Führung von Licht im Pumpkern dient, aufweist, anwenden würde, würden die Führungseigenschaften im Bereich der verspleißten Enden deutlich verschlechtert sein. Auch ist der Lack nicht leistungsbeständig, so daß er bei hohen Leistungen verbrennen würde.

US 6 428 217 offenbart eine Spleißverbindung zwischen zwei Fasern, bei der zumindest eine der Fasern einen Faserkern, der zumindest einen inneren Signalkern und einen diesen umgebenden Pumpkern umfaßt, sowie einen am Pumpkern anliegenden Fasermantel, der zur Führung von Licht im Pumpkern dient, aufweist, der Fasermantel der zumindest einen Faser in einem Verbindungsbereich, der sich vom verspleißten Ende der Faser in Faserlängsrichtung entlang einer vorbestimmten Länge erstreckt, in radialer Richtung zumindest teilweise entfernt ist, und eine Stützhülse vorgesehen ist, in der die verspleißten Enden der beiden Fasern angeordnet sind und die sich entlang des gesamten Verbindungsbereiches sowie darüber hinaus erstreckt, wobei die Stützhülse mit beiden Fasern neben dem Verbindungsbereich mechanisch verbunden ist und entlang des gesamten Verbindungsbereiches mit der jeweiligen Faser mechanisch nicht verbunden sowie von dieser beabstandet ist.

Ausgehend hiervon ist es Aufgabe der Erfindung, eine Spleißverbindung zwischen zwei Fasern, bei der zumindest eine der Fasern einen Faserkern, der zumindest einen inneren Signalkern und einen diesen umgebenden Pumpkern umfaßt, sowie einen am Pumpkern anliegenden Fasermantel, der zur Führung von Licht im Pumpkern dient, aufweist, bereitzustellen, bei der sehr gute Führungseigenschaften für Pump- und Signallicht gewährleistet werden können. Ferner soll ein entsprechendes Verfahren zur Herstellung einer solchen Spleißverbindung bereitgestellt werden.

Erfindungsgemäß wird die Aufgabe gelöst durch eine Spleißverbindung zwischen zwei optischen Fasern, bei der zumindest eine der Fasern einen Faserkern, der zumindest einen inneren Signalkern und einen diesen umgebenden Pumpkern umfaßt, sowie einen am Pumpkern anliegenden Fasermantel, der zur Führung von Licht im Pumpkern dient, aufweist, bei der der Fasermantel der zumindest einen Faser in einem Verbindungsbereich, der sich vom verspleißten Ende der Faser in Faserlängsrichtung entlang einer vorbestimmten Länge erstreckt, in radialer Richtung zumindest teilweise entfernt ist, und bei der eine Stützhülse vorgesehen ist, in der die verspleißten Enden der beiden Fasern angeordnet sind und die sich entlang des gesamten Verbindungsbereiches sowie darüber hinaus erstreckt, wobei die Stützhülse mit beiden Fasern neben dem Verbindungsbereich mechanisch verbunden ist und entlang des gesamten Verbindungsbereiches von der jeweiligen Faser beabstandet sowie mit dieser mechanisch nicht verbunden ist.

Aufgrund der Stützhülse wird die gewünschte mechanische Stabilisierung der Spleißverbindung erreicht, so daß ein unerwünschtes Biegen der Faserkerne verhindert werden kann. Des weiteren dient die Stützhülse als Kontaminationsschutz für die Faserkerne. Da die Stützhülse entlang des gesamten Verbindungsbereiches mit der jeweiligen Faser mechanisch nicht verbunden und von dieser beabstandet ist, werden die Führungseigenschaften für Licht im Pumpkern nicht nachteilig verschlechtert.

Die Stützhülse kann so ausgebildet sein, daß sie eine gewünschte mechanische Mindeststeifigkeit aufweist. Dadurch kann durch die Stützhülse ein Knick- und Biegeschutz für die verspleißten Fasern realisiert werden.

Die mechanische Verbindung zwischen der Stützhülse mit den Fasern ist bevorzugt stoff- und/oder formschlüssig ausgebildet. Dies kann insbesondere durch einen Wärmeeintrag durchgeführt werden. Dazu wird insbesondere Laserstrahlung eines Lasers eingesetzt.

Bei dem im Pumpkern und/oder Signalkern geführten Licht handelt es sich insbesondere um elektromagnetische Strahlung des sichtbaren Spektrums (z.B. 380 nm - 780 nm) sowie des angrenzenden infraroten elektromagnetischen Spektrums (780 nm - 2.500 nm).

Insbesondere ist der Fasermantel im Verbindungsbereich zumindest teilweise so entfernt, daß die Führungseigenschaften hinsichtlich des Pumplichts gleich gut sind wie in Bereichen, in denen der Fasermantel nicht zumindest teilweise entfernt ist.

Die Stützhülse kann einen im wesentlichen konstanten Innenquerschnitt aufweisen. Eine solche Stützhülse bzw. ein solches Stützrohr läßt sich sehr leicht herstellen.

Ferner kann die Stützhülse einen Mittelbereich und zwei sich daran seitlich anschließende Randbereiche aufweisen, wobei die Wandstärke des Mittelbereiches größer ist als die der Randbereiche. Damit wird vorteilhaft erreicht, daß bei dem mechanischen Verbinden der Stützhülse mit den Fasern ein geringer Wärmeeintrag ausreicht, da die mechanische Verbindung in den Randbereichen durchgeführt werden kann.

Bevorzugt erstreckt sich der Mittelbereich über den gesamten Verbindungsbereich sowie etwas darüber hinaus.

Ferner kann bei der erfindungsgemäßen Spleißverbindung die Stützhülse über eine Zwischenhülse mit zumindest einer der beiden Fasern mechanisch verbunden sein. Durch das Vorsehen einer Zwischenhülse ist eine Anpassung an z.B. unterschiedliche Faseraußendurchmesser der beiden verspleißten Fasern möglich. Die mechanische Verbindung von Zwischenhülse und Faser einerseits sowie Stützhülse und Zwischenhülse andererseits kann bevorzugt jeweils als form- und/oder stoffschlüssige Verbindung ausgebildet sein. Zur Ausbildung einer solchen Verbindung kann insbesondere ein Wärmeeintrag genutzt werden. Dazu kann insbesondere Laserstrahlung eines Lasers eingesetzt werden.

Insbesondere kann der Fasermantel der zumindest einen Faser im Verbindungsbereich vollständig entfernt sein.

Die Stützhülse ist vorzugsweise thermisch ausdehnungsangepaßt an das Material der Fasern. Insbesondere kann die Stützhülse aus dem gleichen Material wie die Fasern (bzw. Faserkern und/oder Fasermantel) hergestellt sein. Als Material kann Quarzglas verwendet werden. Jede der beiden Fasern kann eine aktive oder eine passive Faser sein.

Die zumindest eine Faser kann als Dickmantelfaser ausgebildet sein. Als Dickmantelfaser wird hier insbesondere eine Faser verstanden, deren Fasermantel zumindest eine so große Dicke aufweist, daß Mikrobiegeverluste bei üblichen Umweltbedingungen so klein werden, daß keine signifikante Überkopplung von grundmodigem Licht in höhere Moden des Faserkerns erfolgt.

Die Stützhülse kann einstückig ausgebildet sein.

Es wird ferner ein Verfahren zum Herstellen einer Spleißverbindung zwischen zwei Fasern bereitgestellt, wobei zumindest eine der Fasern einen Faserkern, der zumindest einen inneren Signalkern und einen diesen umgebenden Pumpkern umfaßt, sowie einen am Pumpkern anliegenden Fasermantel, der zur Führung von Licht im Pumpkern dient, aufweist, bei dem der Fasermantel der zumindest einen Faser in einem Verbindungsbereich, der sich vom zu verspleißenden Ende der Faser in Faserlängsrichtung entlang einer vorbestimmten Länge erstreckt, in radialer Richtung zumindest teilweise entfernt wird, eine Stützhülse über eine der beiden Fasern geschoben wird, die beiden zu verspleißenden Enden der Fasern zueinander ausgerichtet und miteinander verspleißt werden, die Stützhülse so über die verspleißten Enden geschoben wird, daß sie sich entlang des gesamten Verbindungsbereiches sowie darüber hinaus erstreckt, die Stützhülse mit beiden Fasern neben dem Verbindungsbereich mechanisch verbunden wird und entlang des gesamten Verbindungsbereiches, in dem sie von der jeweiligen Faser beabstandet ist, nicht mechanisch mit dieser verbunden wird.

Mit diesem Verfahren ist es möglich, eine Spleißverbindung mit ausgezeichneten Führungseigenschaften zwischen zwei Fasern herzustellen, wobei zumindest eine der beiden Fasern eine Dickmantelfaser sein kann.

Insbesondere kann der Fasermantel der zumindest einen Faser im Verbindungsbereich vollständig entfernt werden.

Ferner kann bei dem erfindungsgemäßen Verfahren vor dem Verspleißen der beiden Enden über eine der beiden Fasern eine Zwischenhülse geschoben werden, die nach dem Verspleißen neben dem Verbindungsbereich mit einer der Fasern mechanisch verbunden wird, wobei die Stützhülse mit der Zwischenhülse mechanisch verbunden wird.

Die mechanische Verbindung kann bevorzugt durch Wärmeeintrag erreicht werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Schnittdarstellung einer erfindungsgemäßen Spleißverbindung gemäß einer ersten Ausführungsform;
- Fig. 2: eine vergrößerte Schnittdarstellung entlang A-A in Fig. 1;
- Fig. 3 - 7: Schnittdarstellungen zur Erläuterung der Herstellung der Spleißverbindung von Fig. 1;
- Fig. 8: eine schematische Schnittdarstellung einer Spleißverbindung gemäß einer zweiten Ausführungsform;
- Fig. 9: eine schematische Schnittdarstellung einer Spleißverbindung gemäß einer dritten Ausführungsform;
- Fig. 10: eine schematische Schnittdarstellung einer Spleißverbindung gemäß einer vierten Ausführungsform, und
- Fig. 11: eine schematisch Schnittdarstellung einer Spleißverbindung gemäß einer fünften Ausführungsform.

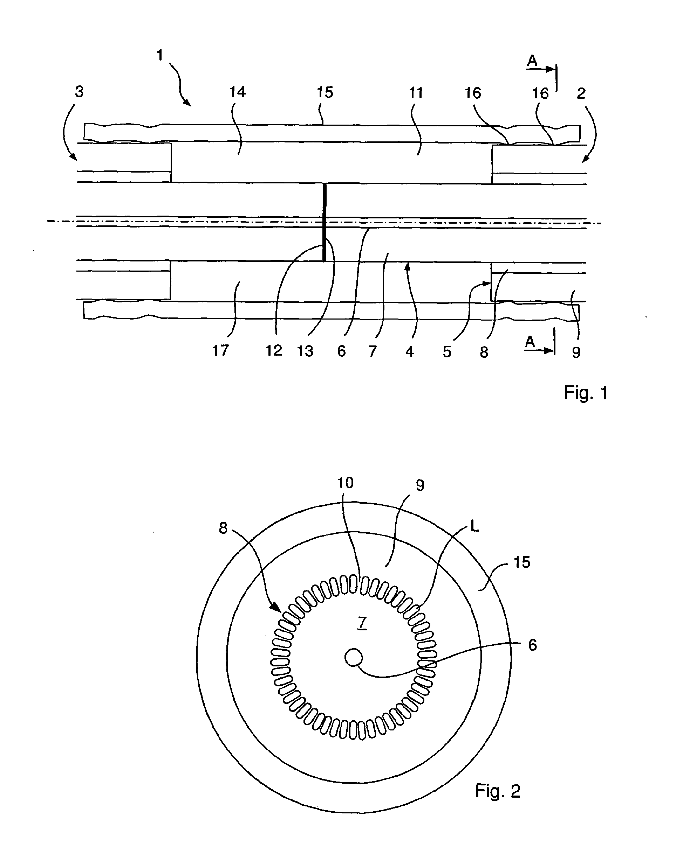

Bei der in Fig. 1 gezeigten Ausführungsform umfaßt die erfindungsgemäße Spleißverbindung 1 eine erste und eine zweite optische Faser bzw. Lichtwellenleiter 2, 3, die miteinander verspleißt sind. Nachdem die beiden Fasern 2, 3 den gleichen Aufbau aufweisen, wird nachfolgend lediglich die erste Faser 2 im Detail beschrieben. In der Schnittdarstellung von Fig. 1 wie auch in allen weiteren Schnittdarstellungen sind zur Vereinfachung der Darstellung keine Schraffuren eingezeichnet.

Die erste Faser 2 weist einen Faserkern 4 sowie einen den Faserkern 4 umgebenden Fasermantel 5 auf. Der Faserkern 4 umfaßt einen inneren Signalkern 6, der von einem Pumpkern 7 umgeben ist. Der Faserkern 4 besteht aus Quarzglas, das für den Signalkern 6 und den Pumpkern 7 unterschiedlich dotiert ist, so daß aufgrund des dadurch erzeugten Brechzahlsprungs zwischen Signalkern 6 und Pumpkern 7 das Signallicht im Signalkern 6 geführt werden kann.

Der Fasermantel 5 weist einen direkt an den Pumpkern 7 angrenzenden Luftmantelabschnitt 8, der den Pumpkern 7 völlig umgibt, sowie einen Hauptmantelabschnitt 9 aus Quarzglas auf. Der Luftmantelabschnitt 8 ist von dünnen Stegen 10 aus Quarzglas axial durchzogen, wie aus Fig. 2 ersichtlich ist. Über diese Stege 10 ist der Hauptmantelabschnitt 9 mechanisch und thermisch mit dem Pumpkern 7 verbunden. Zwischen den Stegen 10 erstrecken sich in Längsrichtung der Faser 2 Luftkammern L, die mit Luft oder einem Gas gefüllt sein können. Aufgrund der beschriebenen Ausbildung des Fasermantels 5 ist der Pumpkern 7 quasi vollständig von einem Luftmantel (Luftmantelabschnitt 8), der durch die Luftkammern L gebildet ist, umgeben, der die Führung des Pumplichts im Pumpkern 7 sicherstellt. Eine solche Faser 2 wird häufig auch Luftmantelfaser (Air-Clad-Faser) genannt.

Die Fasern 2, 3 weisen einen Gesamtquerschnitt auf, der deutlich größer ist als der Querschnitt des Faserkerns 4, und können daher auch als Dickmantelfasern 2, 3 bezeichnet werden.

Der Gesamtdurchmesser der Fasern kann z.B. im Bereich von 0,1 - 2,5 mm und der Durchmesser des Faserkerns kann im Bereich von 50 - 800 µm liegen. Bevorzugt liegt das Verhältnis von Gesamtquerschnitt zu Faserkernquerschnitt größer als 10:1 und liegt insbesondere im Bereich von 10:1 bis 100:1. Die Darstellung in Fig. 1 sowie in den weiteren Figuren ist nicht maßstabstreu, um die Übersichtlichkeit der Figuren zu verbessern.

Wie in Fig. 1 ersichtlich ist, ist der Fasermantel 5 in einem Verbindungsbereich 11, der sich von dem verspleißten Ende 12 der ersten Faser 2 in Längsrichtung der ersten Faser 2 entlang einer vorbestimmten Länge (hier ca. 10 mm) erstreckt, vollständig entfernt, so daß im Verbindungsbereich 11 der Pumpkern 7 freigelegt ist. Ferner kann Fig. 1 entnommen werden, daß die zweite Faser 3 in gleicher Weise wie die erste Faser 2 aufgebaut ist und ebenfalls der Pumpkern 6 von dem verspleißten Ende 13 der zweiten Faser über eine vorbestimmte Länge (zweiter Verbindungsbereich 14) freigelegt ist.

Die Spleißverbindung 1 umfaßt noch eine aus Quarzglas hergestellte Stützhülse 15, die sich über beide Verbindungsbereiche 11 und 14 sowie darüber hinaus erstreckt. Die steife bzw. starre Stützhülse 15 weist eine Wandstärke bzw. -dicke von ca. 30 - 200 µm und einen im wesentlichen konstanten Innendurchmesser auf, der geringfügig größer ist als der Außendurchmesser des Fasermantels 5. Dadurch ist die Stützhülse 15 entlang der beiden Verbindungsbereiche 11 und 14 von den Fasern 2 und 3 beabstandet. Ferner liegt keine mechanische Verbindung der Stützhülse 15 mit den freigelegten Pumpkernen 7 der Fasern 2 und 3 vor, so daß der Hohlraum 17 zwischen Stützhülse 15 und den freigelegten Pumpkernen 7 mit Luft oder Gas gefüllt ist und daher in gleicher Weise wie die Luftmäntelabschnitte 8 als Luftmantel für die freigelegten Pumpkerne 7 dient, so daß in den Verbindungsbereichen 11 und 14 das Pumplicht weiterhin geführt ist. Im Hohlraum 17 kann alternativ auch ein Vakuum vorliegen.

Außerhalb der Verbindungsbereiche 11 und 14 ist die Stützhülse 15 an Kontaktbereichen 16 mit den Fasermänteln 5 verschmolzen und somit mechanisch verbunden. Die Verbindung an den Kontaktbereichen 16 ist somit stoffschlüssig. Dadurch dient die steife Stützhülse 15 als Knickschutz der freigelegten und miteinander verspleißten Faserkerne 4, die in den Verbindungsbereichen 11 und 14 aufgrund der entfernten Fasermäntel 5 nicht gegen Biegen oder Knicken geschützt wären. Ferner schützt die Stützhülse die freigelegten Faserkerne und die Luftmantelabschnitte 8 vor Kontaminationen.

Die Entfernung der Fasermäntel 5 bringt den Vorteil mit sich, daß die Faserkerne 4 gut miteinander verspleißt werden können, so daß hinsichtlich der Führungseigenschaft für Pump- und Signallicht ein qualitativ hochwertiger Spleiß erreicht wird. Ein weiterer Vorteil des Entfernens der Fasermäntel 5 besteht darin, daß die freigelegten Faserkerne 4 leichter gebrochen werden können, um jeweils das zu verspleißende Ende zu bilden. Auch ist ein Polieren des jeweiligen zu verspleißenden Endes bei einem freigelegten Faserkern gut durchführbar.

Würde man die beiden Fasern 2 und 3 miteinander verspleißen, ohne daß in den Verbindungsbereichen 11 und 14 der Fasermantel 5 entfernt ist, würde aufgrund des hohen Wärmeeintrags beim Verspleißen der Luftmantelabschnitt 8 kollabieren, wodurch der Hauptmantelabschnitt 9 in Kontakt mit dem Pumpkern 7 kommen würde, so daß die Führungseigenschaft für den Pumpkern 7 im Bereich der Spleißstelle verloren gehen würden. Außerdem würden Probleme bei der Führung im Signalkern auftreten.

Bei der erfindungsgemäßen Spleißverbindung 1 ist dies aufgrund des mit Luft gefüllten Hohlraumes 17 zwischen der Stützhülse 15 und den freigelegten Pumpkernen 7 der beiden Fasern 2, 3 nicht der Fall, da aufgrund des luft- oder gasgefüllten Hohlraumes 17, in dem alternativ auch ein Vakuum vorliegen kann, die Führungseigenschaft für das Pumplicht beibehalten wird.

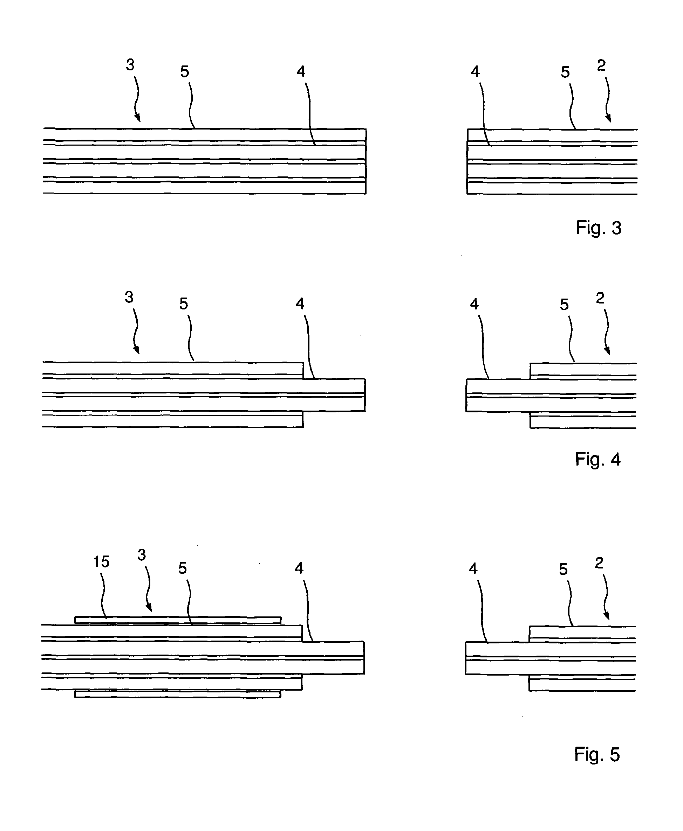

Die in Fig. 1 gezeigte erfindungsgemäße Spleißverbindung kann wie folgt hergestellt werden. Von den beiden Enden der zu verspleißenden Fasern 2, 3 (Fig. 3), die jeweils z.B. durch Brechen einer Faser erzeugt werden, wird jeweils der Fasermantel der jeweiligen Faser 2, 3 entlang einer vorbestimmten Länge entfernt. Dies kann beispielsweise durch Schneiden mit einem Laser (z.B. Femtosekundenlaser), durch Ätzen oder durch Ritzen und Brechen durchgeführt werden.

Falls gewünscht, können die freigelegten Faserkerne jeweils erneut gebrochen bzw. abgeschnitten und gegebenenfalls poliert werden, um ein zu verspleißendes Ende zu erzeugen, das die gewünschten Eigenschaften aufweist. Dies kann z.B. durch Schneiden mit einem Laser (z.B. Femtosekundenlaser) oder durch Ritzen und Brechen durchgeführt werden.

Nachdem die Faserkerne 4 freigelegt sind (Fig. 4), wird über eine der beiden Fasern 2, 3 die Stützhülse 15 geschoben. Bei dem hier beschriebenen Ausführungsbeispiel wird sie über die zweite Faser 3 so weit geschoben, daß sie sich nicht über den freigelegten Faserkern 4 erstreckt, sondern vollständig im Bereich des noch vorhandenen Fasermantels 5 liegt (Fig. 5).

Daraufhin werden die zu verspleißenden Enden der beiden Fasern 2, 3 poliert oder anderweitig präpariert, sofern notwendig. Die Stützhülse kann auch erst nach diesem Schritt oder bereits vor dem Freilegen des Faserkerns über die zweite Faser geschoben werden.

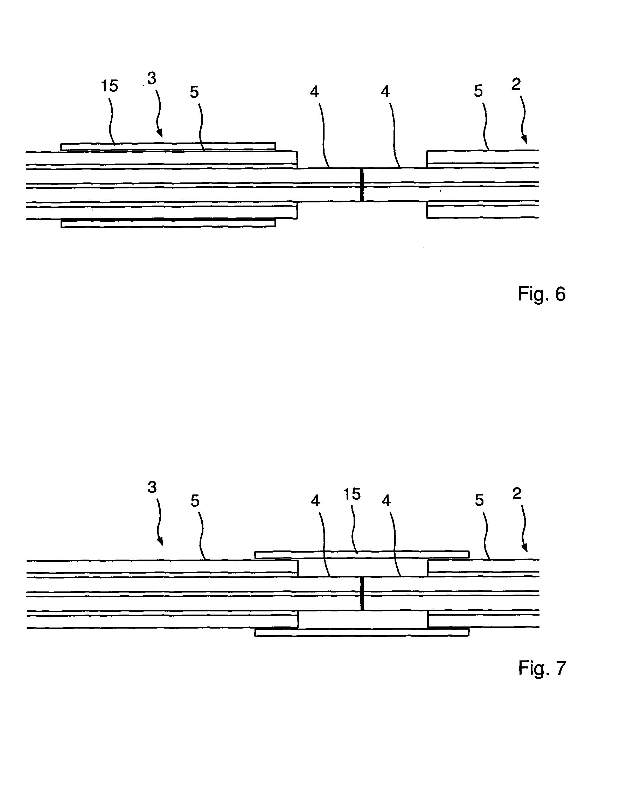

Danach werden die beiden freien Enden der Faserkerne 4 in bekannter Weise zueinander ausgerichtet und verspleißt (Fig. 6).

Nach dem Verspleißen wird die Stützhülse 15 so über die verspleißten Enden geschoben, daß sie sich auf beiden Seiten über die Verbindungsbereiche 11 und 14 erstreckt und somit an beiden Fasermänteln 5 neben den Verbindungsbereichen 11 und 14 anliegt (Fig. 7). In diesem Zustand wird dann die Stützhülse 15 in den Kontaktbereichen 16 auf die Fasermäntel 5 kollabiert, so daß eine mechanisch feste (stoffschlüssige) Verbindung vorliegt und die Spleißverbindung 1 gemäß Fig. 1 hergestellt ist. Dieses Kollabieren wird durch einen gezielten Wärmeeintrag, z.B. mittels eines Lasers, bewirkt.

Natürlich können die Fasermäntel in der üblichen Art und Weise eine äußere Kunststoffummantelung (nicht gezeigt) aufweisen. Diese Kunststoffummantelung wird bevorzugt so weit entfernt, daß die Stützhülse 15 in der beschriebenen Art und Weise auf den Fasermänteln 5 verschoben und mit diesen mechanisch verbunden werden kann. Nach der mechanischen Verbindung von Stützhülse 15 und Fasermänteln 5 kann die Kunststoffummantelung im Bereich der Stützhülse 15 neu aufgebracht werden.

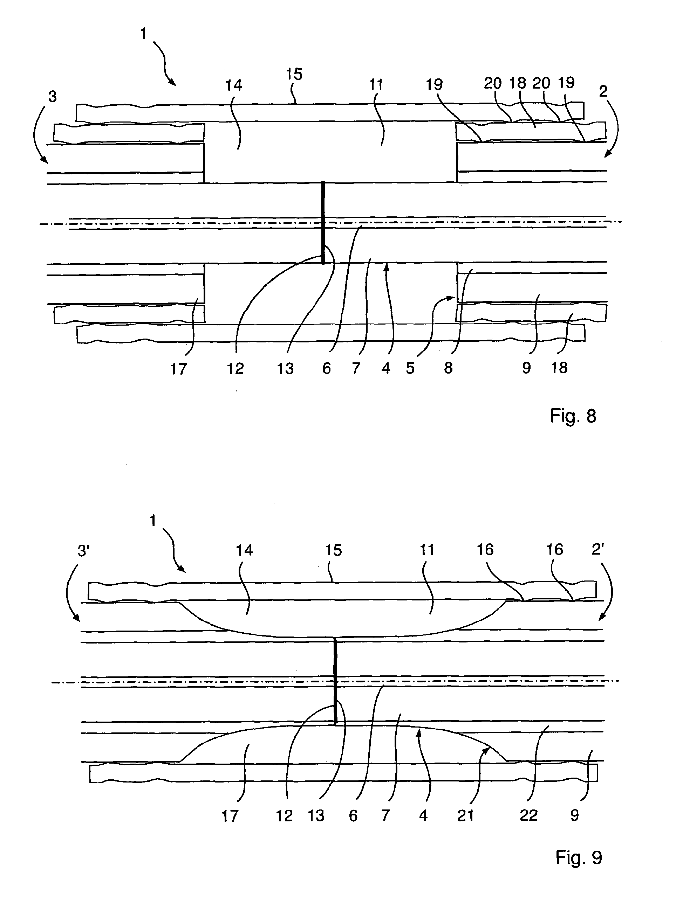

In Fig. 8 ist eine zweite Ausführungsform der erfindungsgemäßen Spleißverbindung 1 gezeigt; die sich von der Ausführungsform gemäß Fig. 1 dadurch unterscheidet, daß zwischen der Stützhülse 15 und den Fasermänteln 5 jeweils eine Zwischenhülse 18 angeordnet ist. Die Zwischenhülsen 18 sind über Kontaktbereiche 19 mechanisch fest mit den Fasermänteln 5 verbunden. Die Stützhülse 15 ist wiederum über Kontaktbereiche 20 fest mit den Zwischenhülsen 18 verbunden. Mit den Zwischenhülsen 18 ist eine Anpassung an unterschiedlich dicke Fasermäntel bzw. unterschiedlich dicke Fasern 2, 3 möglich. Dies erlaubt auch, die Stützhülse über ein (nicht dargestelltes) Coating (bzw. äußerer Beschichtung, z.B. eine Polymerbeschichtung) zu schieben (außerhalb und z.B. anschließend an einen der Verbindungsbereiche 11, 14).

Bei der Herstellung werden in einem Schritt gemäß Fig. 5 zuerst auf beide Fasern die Zwischenhülsen 18 aufgeschoben. Danach wird dann auf eine der beiden Fasern die Stützhülse 15 aufgeschoben. Nach dem Verspleißen der Faserenden werden die Zwischenhülsen 18 mechanisch mit den Fasermänteln verbunden und danach die Stützhülse 15 mit den Zwischenhülsen 18.

In Fig. 9 ist eine weitere Ausführungsform der erfindungsgemäßen Spleißverbindung 1 gezeigt. In dieser Ausführungsform sind die verspleißten Fasern 2' und 3' wiederum gleich ausgebildet, unterscheiden sich von in Fig. 1 und 8 gezeigten Fasern 2, 3 jedoch in der Ausbildung des Fasermantels.

Der Fasermantel 21 der Faser 2' enthält einen direkt am Pumpkern 7 anliegenden Führungsbereich 22 mit einem geringeren Brechungsindex als der Pumpkern 7. Der Führungsbereich 22 kann aus dotiertem Quarz oder auch aus undotiertem Quarz hergestellt sein. Zur Beibehaltung der Führung des Pumplichts ist der Fasermantel 21 im Verbindungsbereich 11, 14 nur teilweise entfernt (z.B. durch Ätzen), so daß stets noch zumindest ein Teil des Führungsbereiches 22 am Pumpkern 7 anliegt. Durch die dann im Bereich der zu verspleißenden Enden vorliegenden deutlich geringeren Dicke des verbleibenden Fasermantels 21 im Vergleich zum Fasermantel 21 außerhalb der Verbindungsbereiche 11, 14 kann der Wärmeeintrag zur Herstellung der Spleißverbindung minimiert werden, so daß die eventuelle Beeinflussung des Dotierungsprofils im Führungsbereich 22 minimiert werden kann. Damit bleibt die Führungseigenschaft auch im Bereich der Spleißverbindung erhalten. Durch die Stützhülse 15 wird die gewünschte notwendige Stabilität gegen Biegen und Knicken der verspleißten Fasern im Bereich der Spleißverbindung erzielt.

In einer Abwandlung der Ausführungsform von Fig. 9 können die Fasermäntel 21 der Fasern 2' und 3' auch vollständig in den Verbindungsbereichen 11 und 14 entfernt werden. In diesem Fall wird die Führungseigenschaft in den Verbindungsbereichen 11 und 14 dann von der vorhandenen Luftschicht in gleicher Weise wie bei der Spleißverbindung von Fig. 1 oder 8 gewährleistet.

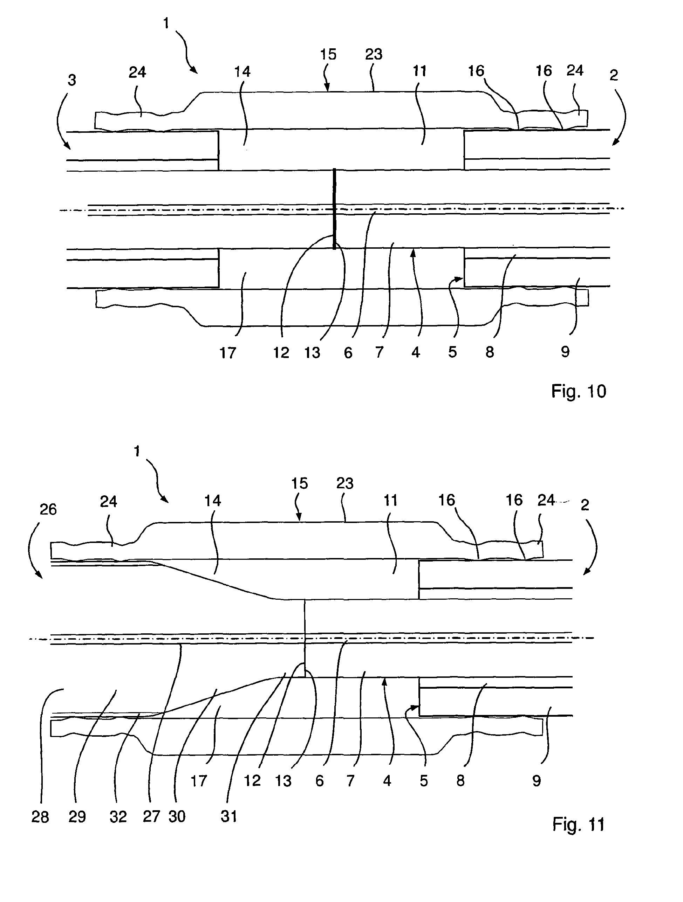

In Fig. 10 ist eine Abwandlung der erfindungsgemäßen Spleißverbindung von Fig. 1 gezeigt, wobei der einzige Unterschied in der Ausbildung der Stützhülse 15 vorliegt. Die Stützhülse 15 weist weiterhin einen im wesentlichen konstanten Innenquerschnitt auf. Jedoch ist die Wanddicke in einem Mittelbereich 23 der Stützhülse 15 größer als in ihren Randbereichen 24, 25. Die Ausdehnung des Mittelbereichs 23 in axialer Richtung ist dabei bevorzugt so gewählt, daß sich der Mittelbereich 23 bis über die Fasermäntel 5 erstreckt. Die mechanische Verbindung zwischen der Stützhülse 15 und den Fasermänteln 5 wird dann in den Randbereichen 24 und 25 durchgeführt. Dies führt zu dem Vorteil, daß zur Herstellung dieser mechanischen Verbindung ein geringer Wärmeeintrag aufgrund der geringeren Wandstärke bzw. -dicke der Randbereiche 24, 25 notwendig ist und eine erhöhte Stabilität durch die höhere Wandstärke bzw. -dicke im Mittelbereich 23 zur Verfügung gestellt werden kann.

Die erfindungsgemäße Spleißverbindung 1 ist nicht auf das Verspleißen von zwei gleich ausgebildeten Fasern bzw. Lichtwellenleitern beschränkt. So können z.B. mit den Zwischenhülsen 18 gemäß Fig. 8 unterschiedliche Außendurchmesser der zu verspleißenden Fasern 2, 3 kompensiert werden.

In Fig. 11 ist ein Ausführungsbeispiel gezeigt, bei der eine erste Faser 2, wie sie beispielsweise in Fig. 1 beschrieben wurde, mit einer sich zu ihrem verspleißten Ende verjüngenden zweiten Faser 26 verspleißt ist. Die zweite Faser 26 kann beispielsweise als Einkoppelfaser dienen, wobei sie einen Signalkern 27 mit konstantem Querschnitt und einen sich verjüngenden Pumpkern 28 aufweist. Der Pumpkern 28 ist dabei so ausgebildet, daß er einen ersten Abschnitt 29 mit großem Außendurchmesser, einen sich daran anschließenden zweiten Abschnitt 30, der sich verjüngt, und einen sich daran anschließenden dritten Abschnitt 31 umfaßt, dessen freies Ende mit dem Ende der ersten Faser 2 verspleißt ist. Zur Führung des Pumplichtes kann der erste Abschnitt 30 einen radial außen liegenden Dotierungsbereich 32 aufweisen.

Die Verjüngung ist so ausgebildet, daß Pumplicht aus der zweiten Faser 26 möglichst gut (insbesondere bestmöglich) in den Faserkern der ersten Faser 2 gekoppelt wird.

Die Stützhülse 15 ist bei der Ausführungsform von Fig. 11 in gleicher Weise wie bei der Ausführungsform von Fig. 9 ausgebildet.

## Patentansprüche

1. Spleißverbindung zwischen zwei Fasern, bei der zumindest eine der Fasern (2, 3) einen Faserkern (4), der zumindest einen inneren Signalkern (6) und einen diesen umgebenden Pumpkern (7) umfaßt, sowie einen am Pumpkern (7) anliegenden und aus Quarzglas gebildeten Fasermantel (5), der zur Führung von Licht im Pumpkern dient und der einen direkt an den Pumpkern (7) angrenzenden Luftmantelabschnitt (8) und einen Hauptmantelabschnitt (9) aufweist, aufweist, der Fasermantel (5) der zumindest einen Faser (2, 3) in einem Verbindungsbereich (11, 14), der sich vom verspleißten Ende (12, 13) der Faser (2, 3) in Faserlängsrichtung entlang einer vorbestimmten Länge erstreckt, in radialer Richtung zumindest teilweise entfernt ist, und eine Stützhülse (15) vorgesehen ist, in der die verspleißten Enden (12, 13) der beiden Fasern (2, 3) angeordnet sind und die sich entlang des gesamten Verbindungsbereiches (11, 14) sowie darüber hinaus erstreckt,
wobei die Stützhülse (15) mit beiden Fasern (2, 3) neben dem Verbindungsbereich (11, 14) mechanisch verbunden ist und entlang des gesamten Verbindungsbereiches (11, 14) mit der jeweiligen Faser (2, 3) mechanisch nicht verbunden sowie von dieser beabstandet ist.

2. Spleißverbindung nach Anspruch 1, bei der die Stützhülse (15) einen im wesentlichen konstanten Innenquerschnitt aufweist.

3. Spleißverbindung nach Anspruch 1 oder 2, bei der die Stützhülse (15) einen Mittelbereich (23) und zwei sich daran seitlich anschließende Randbereiche (24, 25) aufweist, wobei die Wandstärke des Mittelbereiches (23) größer ist als die der Randbereiche (24, 25).

4. Spleißverbindung nach einem der obigen Ansprüche, bei der die Stützhülse (15) über eine Zwischenhülse (18) mit zumindest einer der beiden Fasern (2, 3) mechanisch verbunden ist.

5. Spleißverbindung nach einem der obigen Ansprüche, bei der der Fasermantel (5) der zumindest einen Faser (2, 3) im Verbindungsbereich (11, 14) vollständig entfernt ist.

6. Spleißverbindung nach einem der obigen Ansprüche, bei der sich zumindest eine der Fasern (26) innerhalb der Stützhülse (15) verjüngt.

7. Spleißverbindung nach einem der obigen Ansprüche, bei der beide Fasern (2, 3) gleich ausgebildet sind.

8. Spleißverbindung nach einem der obigen Ansprüche, bei der die Stützhülse (15) einstückig ausgebildet ist.

9. Verfahren zum Herstellen einer Spleißverbindung zwischen zwei Fasern, wobei zumindest eine der Fasern einen Faserkern, der zumindest einen inneren Signalkern und einen diesen umgebenden Pumpkern umfaßt, sowie einen am Pumpkern anliegenden und aus Quarzglas gebildeten Fasermantel, der zur Führung von Licht im Pumpkern dient und der einen direkt an den Pumpkern angrenzenden Luftmantelabschnitt und einen Hauptmantelabschnitt aufweist,
bei dem der Fasermantel der zumindest einen Faser in einem Verbindungsbereich, der sich vom zu verspleißenden Ende der Faser in Faserlängsrichtung entlang einer vorbestimmten Länge erstreckt, in radialer Richtung zumindest teilweise entfernt wird,
eine Stützhülse über eine der beiden Fasern geschoben wird,
die beiden zu verspleißenden Enden der Fasern zueinander ausgerichtet und miteinander verspleißt werden,
die Stützhülse so über die verspleißten Enden geschoben wird, daß sie sich entlang des gesamten Verbindungsbereiches sowie darüber hinaus erstreckt,
die Stützhülse mit beiden Fasern neben dem Verbindungsbereich mechanisch verbunden wird und entlang des gesamten Verbindungsbereiches, in dem sie von der jeweiligen Faser beabstandet ist, nicht mechanisch mit dieser verbunden wird.

10. Verfahren nach Anspruch 9, bei dem der Fasermantel der zumindest einen Faser im Verbindungsbereich vollständig entfernt wird.

11. Verfahren nach Anspruch 9 oder 10, .bei dem vor dem Verspleißen der beiden Enden über eine der Fasern eine Zwischenhülse geschoben wird, die nach dem Verspleißen neben dem Verbindungsbereich mit einer der Fasern mechanisch verbunden wird, und die Stützhülse mit der Zwischenhülse mechanisch verbunden wird.

## Claims

1. Spliced joint between two fibres, in which
at least one of the fibres (2, 3) has a fibre core (4) comprising at least one inner signal core (6) and a pump core (7) that surrounds the latter, and a fibre sheath (5), which is formed from quartz glass and lies against the pump core (7) and serves to guide light in the pump core and which comprises an air sheath portion (8), which directly adjoins the pump core (7), and a main sheath portion (9),
the fibre sheath (5) of the at least one fibre (2, 3) is at least partially removed in the radial direction in a connection region (11, 14) that extends along a predetermined length from the spliced end (12, 13) of the fibre (2, 3), in the longitudinal direction of the fibre,
and a support sleeve (15) is provided, in which the spliced ends (12, 13) of the two fibres (2, 3) are disposed and which extends along the entire connection region (11, 14) and therebeyond,
wherein the support sleeve (15) is mechanically connected to both fibres (2, 3) next to the connection region (11, 14) and, along the entire connection region (11, 14), is not mechanically connected to the respective fibre (2, 3) and is at a distance from the latter.

2. Spliced joint according to claim 1, in which the support sleeve (15) has a substantially constant inner cross-section.

3. Spliced joint according to claim 1 or 2, in which the support sleeve (15) has a central region (23) and two edge regions (24, 25) that adjoin the central region laterally, wherein the wall thickness of the central region (23) is greater than that of the edge regions (24, 25).

4. Spliced joint according to one of the above claims, in which the support sleeve (15) is mechanically connected to at least one of the two fibres (2, 3) via an intermediate sleeve (18).

5. Spliced joint according to one of the above claims, in which the fibre sheath (5) of the at least one fibre (2, 3) is completely removed in the connection region (11, 14).

6. Spliced joint according to one of the above claims, in which at least one of the fibres (26) tapers within the support sleeve (15).

7. Spliced joint according to one of the above claims, in which the two fibres (2, 3) are realized in the same manner.

8. Spliced joint according to one of the above claims, in which the support sleeve (15) is realized as a single piece.

9. Method for producing a spliced joint between two fibres, wherein at least one of the fibres has a fibre core comprising at least one inner signal core and a pump core that surrounds the latter, and a fibre sheath, which is formed from quartz glass and lies against the pump core and serves to guide light in the pump core and which comprises an air sheath portion, which directly adjoins the pump core, and a main sheath portion, in which the fibre sheath of the at least one fibre is at least partially removed in the radial direction in a connection region that extends along a predetermined length from the end of the fibre to be spliced, in the longitudinal direction of the fibre,
a support sleeve is pushed over one of the two fibres,
the two ends of the fibres to be spliced are aligned to each other and spliced to each other,
the support sleeve is pushed over the spliced ends such that it extends along the entire connection region and therebeyond,
the support sleeve is mechanically connected to both fibres next to the connection region and, along the entire connection region, in which it is at a distance from the respective fibre, is not mechanically connected to the latter.

10. Method according to claim 9, in which the fibre sheath of the at least one fibre is completely removed in the connection region.

11. Method according to claim 9 or 10, in which an intermediate sleeve is pushed over one of the fibres before the splicing of the two ends, which intermediate sleeve is mechanically connected to one of the fibres, next to the connection region, after the splicing, and the support sleeve is mechanically connected to the intermediate sleeve.

## Revendications

1. Jonction à épissure entre deux fibres, dans laquelle au moins une des fibres (2, 3) comprend un coeur de fibre (4) qui comprend au moins un coeur de signal (6) et un coeur de pompe (7) entourant celui-ci, ainsi qu'un revêtement de fibre (5), constitué de verre à quartz, s'appuyant contre le coeur de pompe (7), qui sert au guidage de la lumière dans le coeur de pompe (7) et qui comprend une portion à couche d'air (8) à proximité directe du coeur de pompe (7) et une portion de revêtement principale (9),
le revêtement de fibre (5) de l'au moins une fibre (2, 3) est retiré au moins partiellement dans la direction radiale, dans une zone de jonction (11, 14), qui s'étend de l'extrémité épissée (12, 13) de la fibre (2, 3) dans la direction longitudinale de la fibre le long d'une longueur prédéterminée,
et une gaine d'appui (15) est prévue, dans laquelle les extrémités épissées (12, 13) des deux fibres (2, 3) sont disposées et qui s'étend le long de l'ensemble de la zone de jonction (11, 14) ainsi qu'au-delà,
la gaine d'appui (15) étant reliée mécaniquement aux deux fibres (2, 3) à proximité de la zone de jonction (11, 14) et n'est pas reliée mécaniquement le long de l'ensemble de la zone de jonction (11, 14) aux fibres correspondantes (2, 3) et éloignée de celles-ci.

2. Jonction à épissure selon la revendication 1, dans laquelle la gaine d'appui (15) présente une section transversale interne globalement constante.

3. Jonction à épissure selon la revendication 1 ou 2, dans laquelle la gaine d'appui (15) comprend une zone centrale (23) et deux bords (24, 25) s'y raccordant latéralement, l'épaisseur de paroi de la zone centrale (23) étant supérieure à celle des bords (24, 25).

4. Jonction à épissure selon l'une des revendications précédentes, dans laquelle la gaine d'appui (15) est reliée mécaniquement, par l'intermédiaire d'une gaine intermédiaire (18), à au moins une des deux fibres (2, 3).

5. Jonction à épissure selon l'une des revendications précédentes, dans laquelle le revêtement de fibre (5) de l'au moins une fibre (2, 3) est entièrement retirée dans la zone de jonction (11, 14).

6. Jonction à épissure selon l'une des revendications précédentes, dans laquelle l'au moins une des fibres (26) se rétrécit à l'intérieur de la gaine d'appui (15).

7. Jonction à épissure selon l'une des revendications précédentes, dans laquelle les deux fibres (2, 3) sont identiques.

8. Jonction à épissure selon l'une des revendications précédentes, dans laquelle la gaine d'appui (15) est formée d'une seule pièce.

9. Procédé de réalisation d'une jonction à épissure entre deux fibres, au moins une des fibres comprenant un coeur de fibre qui comprend au moins un coeur de signal interne et un coeur de pompe entourant celui-ci, ainsi qu'un revêtement de fibre, constitué de verre à quartz, s'appuyant contre le coeur de pompe, qui sert au guidage de la lumière dans le coeur de pompe et qui comprend une portion à couche d'air à proximité directe du coeur de pompe et une portion de revêtement principale,
dans lequel le revêtement de fibre de l'au moins une fibre est au moins partiellement retiré dans la direction radiale, dans une zone de jonction qui s'étend de l'extrémité à épisser des fibres dans la direction longitudinale des fibres le long d'une longueur prédéterminée,
une gaine d'appui est glissée sur l'une des deux fibres,
les deux extrémités des fibres à épisser sont orientées l'une vers l'autre et épissées entre elles,
la gaine d'appui est glissée sur les extrémités épissées de façon à ce qu'elle s'étende le long de l'ensemble de la zone de jonction ainsi qu'au-delà,
la gaine d'appui est reliée mécaniquement avec les deux fibres à proximité de la zone de jonction et, le long de l'ensemble de la zone de jonction, n'est pas reliée mécaniquement à celle-ci, dans laquelle elle est éloignée des fibres correspondantes.

10. Procédé selon la revendication 9, dans lequel le revêtement de fibre de l'au moins une fibre est entièrement retiré dans la zone de jonction.

11. Procédé selon la revendication 9 ou 10, dans lequel, avant l'épissure des deux extrémités, une gaine intermédiaire est glissée sur une des fibres, et est reliée mécaniquement après l'épissure à proximité de la zone de jonction avec une des fibres et la gaine d'appui est reliée mécaniquement avec la gaine intermédiaire.
